# EUROPEAN PATENT SPECIFICATION

(11) **EP 2 867 692 B1**
(45) Date of publication and mention of the grant of the patent: **11.04.2018**
(21) Application number: 12743403.3
(22) Date of filing: 02.07.2012
(51) Int. Cl.: G01S 5/02, H04W 88/06, H04W 4/02

(54) **METHOD FOR GENERATING AND USING A MAP**
VERFAHREN ZUR ERZEUGUNG UND ANWENDUNG EINER KARTE
PROCÉDÉ DE GÉNÉRATION ET D'UTILISATION D'UNE CARTE

(43) Date of publication of application: 06.05.2015
(73) Proprietor: Locoslab GmbH, 53173 Bonn (DE)
(72) Inventor: MARRÓN, Pedro José, 53173 Bonn (DE); HANDTE, Marcus, 53844 Troisdorf (DE); WAGNER, Stephan, 45149 Essen (DE)
(74) Representative: Schmelcher, Thilo
(86) International application number: PCT/EP2012/062865
(87) International publication number: WO 2014/005618

(56) References cited:
- US-A1- 2008 091 345
- US-A1- 2012 056 785

## Description

The invention relates to a method for using and generating a map, in particular an indoor map.

### Background

Providing localization is known in the art. These systems typically rely on the capabilities of a user device to detect its position e.g. via services of a global positioning system such as GPS. In addition or as an alternative thereto it is also possible to calculate a position on basis of the time which is lapsing while time stamped signals from different sources arrive at a certain sink or vice versa, i.e. while time stamped signals from one source arrive at a plurality of sinks (Observed Time Difference of Arrival). These systems are for example used within radio networks such as 3GPP based networks. In addition or as an alternative thereto it is also possible to calculate a position based on W-LAN Services. These systems take into account the limited range of systems such that being in reach of one of these systems means that the user is in its vicinity. Within radio networks such as 3GPP based networks, this is performed e.g. on cell level, whereby a cell is identified by a Cell ID. The process of determining the fingerprint of sources is also described as calibration.

The above mentioned systems however suffer from severe problems as will be detailed in the following.

A first problem encountered is that the accuracy is rather low. Another problem is that e.g. systems based on radio networks as well as GPS are known not to operate well indoor. Systems based on a limited range afford additionally substantial time as the respective data needs to be gathered. All these systems suffer severely from scattering and attenuation. Scattering and attenuation however severely diminishes the use of systems based on the overall knowledge of being in range of some system. Hence, the data provided by these systems is of reduced value as it does not offer accuracy nor may the data be determined in a rapid manner. Additionally, also the measuring process is time consuming and typically leads to a trade-off with respect to accuracy or time needed for map generation.

Such a system is for example known from US 2012/056785 A1. In order to cope with the problems mentioned above the system proposes to use a time varying map which is measured with respect ot changing properties of the indoor structure, such as closed and opened doors.

Other systems, such as the one suggested by US 2008/091345 A1 rely on Powerline technology and stray radiation produced within such systems to localize a tag within a household.

It is therefore an object of the invention to overcome one or more of the above mentioned disadvantages.

The invention therefore proposes a method for using and generating a map, in particular an indoor map, allowing for localizing a position based on one or more detected wireless signals originating from one or more sources, whereby a source is selected from the group comprising near field communication device, mobile telephone, W-LAN access point, Bluetooth access point, etc.. The method comprises a step of detecting at certain positions, each of said certain positions corresponding to a position on the map, by a plurality of detectors at substantially the same time at least one wireless signal originating from at least one of said one or more sources with respect to its signal strength. The plurality of detectors are arranged such that they reflect different positions of a corresponding user device and its physical characteristics such as attenuation or scattering when worn by a user at the human body, thereby allowing for providing detected signal strengths with respect to different orientations. The method comprises also as step of storing said signal strengths of each detected wireless signal originating from said one of said one or more sources with respect to the plurality of detectors and the certain position. Thereafter the method allows for provisioning of said map. Afterwards a user device may detect at an unknown position a number of wireless signals and their signal strength, and the method allows for comparing said wireless signals detected by said user device with said stored signal strengths with respect to at least a best match in order to ensure that a certain position of the user device with respect to a human body and its physical properties are correctly taken into account.

The invention also proposes an appropriate Measurement arrangement for generating a map, in particular an indoor map, as well as for a user device for using a map.

The invention therefore allows for gathering calibration specific data in a rapid manner and it also allows for localizing a user within a scattering and attenuating surrounding.

### Brief Description of the Figures

Some embodiments of apparatus and/or methods in accordance with embodiments of the present invention are now described, by way of example only, and with reference to the accompanying drawings, in which:
Fig. 1 shows schematically an exemplary set-up as it may be used in some of the embodiments of the invention,
Fig. 2 shows schematically an exemplary arrangement of a user having a plurality of detectors according to some embodiments of the invention,
Fig. 3 shows schematically exemplary arrangements of a user and a user device according to some embodiments of the invention,
Fig. 4 shows schematically a flowchart of exemplary method steps according some of the embodiments of the invention, and
Fig. 5 shows schematically exemplary system setups and exemplary functional entities according some of the embodiments of the invention.

### Detailed Description

Before embodiments of the invention are described in more detail, it is to be understood that this invention is not limited to the particular component parts of the devices described or steps of the methods described, as such devices and methods may vary. It is also to be understood that the terminology used herein is for purpose of describing particular embodiments only, and is not intended to be limiting. It must be noted that, as used in the specification and in the appended claims, the singular forms "a", "an" and "the" include singular and/or plural referents unless the context clearly indicates otherwise.

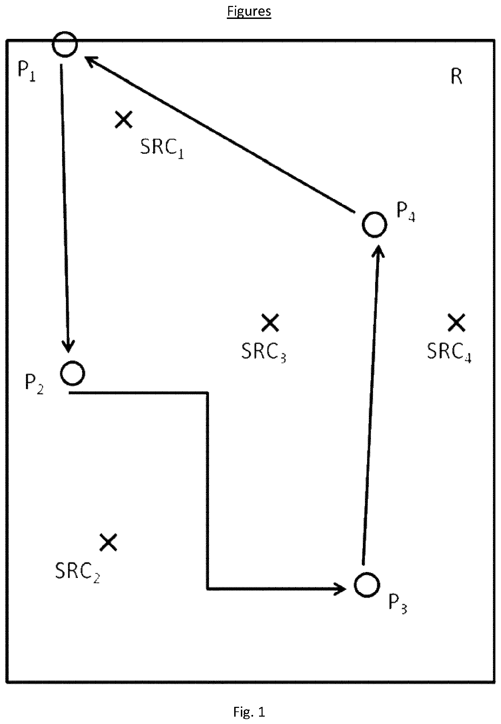

In Fig. 1 an exemplary set-up as it may be used in some of the embodiments of the invention is schematically shown. There it is assumed that for purpose of mapping a certain area marked R shall be subject to the method. Within this area a number of sources providing wireless signals are located. For ease of description only the shown four sources SRC₁, SRC₂, SRC₃, SRC₄ are assumed, while it is understood that there might be more or less sources located. Furthermore, it is assumed that these sources may provide wireless signals according to any appropriate technology which may be later-on also be detected by a user device UD₁, UD₂. Exemplary wireless signals are signals of a near field communication system, mobile telephone, W-LAN, Bluetooth, etc. The signals may also originate from beacon like services or broadcast services. It is further assumed that a source is not limited to one particular type of wireless signal, but any source may provide a plurality of wireless signals, e.g. a source may provide both a Bluetooth wireless signal as well as W-Lan wireless signal.

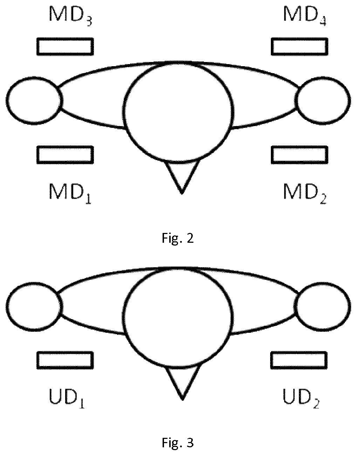

In the beginning, a measurement arrangement is used for generating a map. Such a measurement arrangement is shown for example in Fig. 2. There a user is provided with a plurality of detectors, i.e. at least two detectors. For ease of description only the shown four detectors MD₁, MD₂, MD₃, MD₄ are assumed, while it is understood that there might be more or less detectors provided. The detectors MD₁, MD₂, MD₃, MD₄ are arranged such that they reflect different positions of a corresponding user device UD₁, UD₂ and its physical characteristics such as attenuation or scattering when worn by a user at the human body.

I.e. assume that the measurement arrangement is located at position P₁ whereby detectors MD₁, MD₂ are facing the SRC₁, SRC₂, SRC₃, SRC₄ located within an area R while detectors MD₃, MD₄ are located in opposite direction. Then the signals of all sources SRC₁, SRC₂, SRC₃, SRC₄ will be at least subject to attenuation by the user's body with respect to detectors MD₃, MD₄. It is to be noted that the attenuation may vary according to the used frequencies for the respective wireless signals. Now assume that with the same heading the measurement arrangement is located at position P₂. Then the signals of source SRC₁ will be at least subject to attenuation by the user's body with respect to detectors MD₁, MD₂ while source SRC₂ will be at least subject to attenuation by the user's body with respect to detectors MD₃, MD₄ while source SRC₃ and SRC₄ will be at least subject to attenuation by the user's body with respect to detectors MD₁, MD₃. The signals of SRC₃ and SRC₄ in addition may vary also due to their different distance and orientation with respect to P₂. Furthermore, even not shown there might also be scattering e.g. due to reflective surfaces.

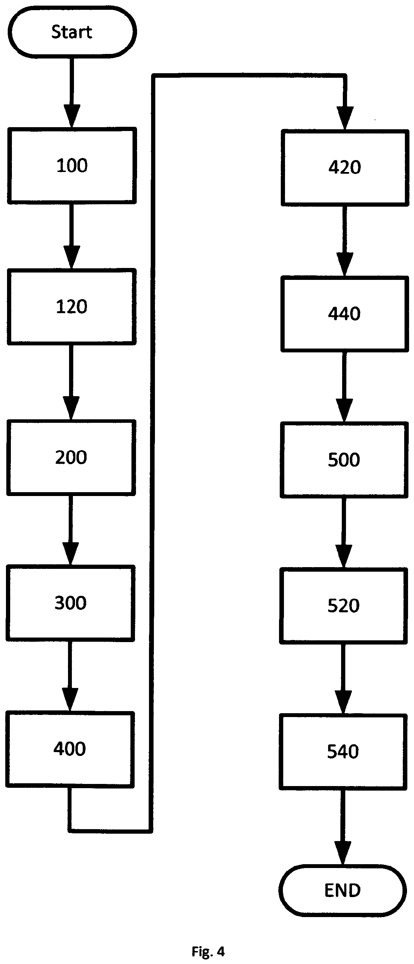

Now, turning to the method for generating a map according to a first step 100 as shown in the exemplary flowchart displayed in figure 4. At certain positions P₁, P₂, P₃, P₄ in a first step 100 a number of wireless signals is detected by said plurality of detectors MD₁, MD₂, MD₃, MD₄ at substantially the same time. In doing so, the measurement time is dramatically reduced as within one step a plurality of different positions each reflecting different positions of a corresponding user device UD₁, UD₂ and its physical characteristics such as attenuation or scattering when worn by a user at the human body are detected. Each of these detectors provides for each measured signal of each source at least one signal strength. The term signal strength is thereby to be understood broadly as any appropriate metric allowing for distinguishing physical link properties pertaining to the signal strength.

A possible result of measurements at position P₁ may result in an exemplary table as follows:

**Table 1 Signal strengths at position P₁**

| | MD₁ | MD₂ | MD₃ | MD₄ |
|---|---|---|---|---|
| SRC₁ W-Lan | Strong | Strong | Weak | Weak |
| SRC₁ Bluetooth | Weak | Weak | No signal | No signal |
| SRC₂ | No signal | No signal | No signal | No signal |
| SRC₃ | Weak | Weak | No signal | No signal |
| SRC₄ | No signal | Weak | No signal | No signal |
| GPS | Weak Position P'₁ | Weak Position P'₁ | Strong Position P₁ | Strong Position P₁ |

Note, even though in Table 1 literal expressions are used it is to be understood that any kind of metric may be used.

At Position P₁ it may be - as shown in the table 1 above - that in addition to the wireless signals of sources SRC₁, SRC₂, SRC₃, SRC₄ also a GPS signal may be detected but while the detectors MD₁ and MD₂ facing area R having weak signals and therefore may only determine a position having a certain accuracy leading to an assumed position P'₁ the detectors MD₃ and MD₄ having strong signals and therefore may determine a position having a higher accuracy leading to an assumed position P₁.

Now subject to an optional step 120 said wireless signals are filtered to remove devices from the list which are known to be highly mobile such as smart phones acting as access points. Be removing such devices from the list of sources accuracy is improved as in the other case depending on the mutual positions of measurement arrangement and a mobile wireless source the results are deprived of any relevance with respect to positions. Other issues may also be taken into account, e.g. the signal strengths as a function of distance, i.e. it is known that the signal strength detected by a device may change rapidly in close vicinity of the source while in higher distance the differences in signal strength with respect to the same distance variation is much smaller and may therefore not provide enough information to disambiguate two positions nearby. Hence, it may also be foreseen that signals which do not provide for a clear distinction may also be filtered. E.g. in the example above, one may filter out SRC₂ and/or SRC₃ and/or SRC₄. This decision may also be based on the full number of measured sources available at a certain position and or the technology of the source and its respective range.

The signal strengths may be stored in another step 200, e.g. in a manner as shown in table 1. This process is repeated at a plurality of positions.

Now depending on the technology which is intended for use of the map generated it may be foreseen that the map is provisioned in a step 300 towards a user device UD₁, UD₂ and/or it may be foreseen that the map is provisioned in a step 300 towards a Server SRV.

Now that the map is determined, a user device UD₁, UD₂ may enter the area R at an unknown position and detects in a step 400 a number of wireless signals and their signal strength.

Depending on the actual type of provisioning the user device UD₁, UD₂ may determine its position alone and or it may let the server SRV determine the position. Irrespective of the actual type of provisioning, the respective apparatus is comparing in a step 500 said wireless signals detected by said user device UD₁, UD₂ with said stored signal strengths with respect to at least a best match in order to ensure that a certain position of the user device UD₁, UD₂ with respect to a human body and its physical properties are correctly taken into account.

For ease of description, we will assume that a user device UD₁ has measured in step 400 the following signal strengths with respect to different sources:

**Table 2 Signal strengths of UD₁**

| | UD₁ |
|---|---|
| SRC_{1 W-Lan} | Strong |
| SRC_{1 Bluetooth} | Weak |
| SRC₃ | Weak |
| SRC₄ | Weak |
| GPS | Weak |
| | Position P'₁ |

A comparison of the measured signal strengths with signal strengths stored leads immediately to position P₁. Hence, the position may therefore be determined in a rapid manner and with a higher accuracy as it is now possible to include signal strength values of the sources rather than having coarse accuracy of only knowing that a certain source is in reach whereby said situation may be worse in view of attenuation by user's body, i.e. if one would not rely on measured signal values but would only have the information in the map that a certain source is in reach irrespective of its signal strength than it would no longer be easily possible to determine a location.

To further enhance the method, it may be foreseen that the step of detecting 100 at a certain position P₁, P₂, P₃, P₄ is performed at a plurality of predetermined positions, while signal strengths detected between these predetermined positions P₁, P₂, P₃, P₄ are held to be located substantially on a trajectory which is assumed to be passed along by a substantial constant velocity. I.e. first measurements are taken at substantially the same time t₁ at position P₁. Then, the measurement arrangement is moved towards position P₁ where another measurement is taken at substantially the same time t₂. Now assume that in between these predetermined positions P₁, P₂ a number of further measurements are taken than it is assumed that they are taken on a trajectory. If, e.g. every 10 seconds measurements are triggered and moving the measurement arrangement from position P₁ towards P₂ takes 30 seconds, than 3 measurements are taken along the arrow in Fig. 1. I.e. the actual measurements are attributed towards assumed interpositions. The signal strengths at theses assumed interpositions may also be stored in said step 200. In doing so the accuracy may be enhanced again as there will be further measurement values in between allowing for increased accuracy.

Often it is rather helpful to identify a certain position P₁, P₂, P₃, P₄ in an optional step 440 by recognition of a particular near field communication device and/or by determining an optical code such as a QR-Code. Such features may be of particular relevance on fairs where many booths are equipped with such features.

According to a further option the method may also allow for an optional communication 520 of user devices UD₁, UD₂ such that actual positions of said user devices may be exchanged and/or routes towards one another may be exchanged. Again this optional service may be provided via a Server SRV or it may be designed such that the user devices communicate with each other by known means.

According to a still further option the method may also allow for an optional communication 540 of user devices UD₁, UD₂ such that a time for a meeting of different users may be exchanged. Again this optional service may be provided via a Server SRV or it may be designed such that the user devices communicate with each other by known means.

Additionally the method may also include further comparisons to enhance the accuracy. E.g. in addition to a best match one or more other criteria may be subject of the comparison. E.g. it may be foreseen that the step of comparing 500 said wireless signals detected by said user device UD₁, UD₂ with said stored signal strengths comprises a comparison with respect to a worst match.

The method may even be further automated if the method steps 100 to 200 are performed by an automated measuring system such as a robot. E.g. assume that the area R is a fair. Then it would be rather easy for a robot to do the measurements automatically by moving the measurement arrangement through the area R. The way may be predetermined or may even be autonomously organized. As a robot may also rely on further sensors, it may determine its position almost exactly.

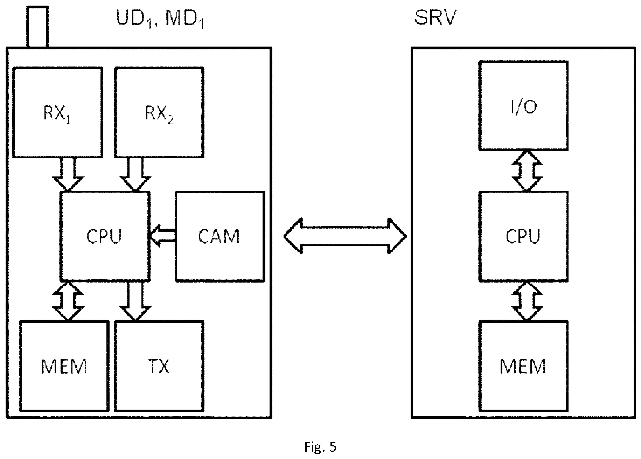

A detector MD₁ of a measurement arrangement for generating a map, in particular an indoor map, allowing for localizing a position based on one or more detected wireless signals originating from one or more sources SRC₁, SRC₂, SRC₃, SRC₄ is shown in Figure 5 on the left hand side. The detector MD₁ comprises a plurality of receivers for different wireless signals, e.g. RX₁, RX₂. These receivers provide an indication of a detected wireless signal source as well as its signal strength towards a processing unit CPU. The processing unit may provide further filtering as described above. The values of each source are stored in a memory which may be a memory MEM built in to the detector itself or a memory common to all detectors of a measurement arrangement or it may be a memory located on a server SRV. For accessing a server, the detector may also be equipped with a transmitter TX.

Within a Measurement arrangement a plurality of said detectors are arranged, i.e. two or more. E.g. assume that the measurement arrangement of figure 2 would only comprise detectors MD₁, MD₂ than additional values resembling those of MD₃, MD₄ could be achieved by reversing the direction of the measurement arrangement, i.e. one would need about twice the time compared to the situation on four detectors. Preferably 4 to 8 detectors are used.

A user device UD₁, UD₂ for using a map, in particular an indoor map, allowing for localizing a position based on one or more detected wireless signals originating from one or more sources is also shown in Figure 5 on the left hand side. The user device UD₁ comprises one or more receiver RX₁, RX₂ for receiving wireless signals originating from said one or more sources at an unknown position a number of wireless signals and for detecting their signal strength, and Means for requesting CPU a Comparison of said wireless signals detected by said user device with said stored signal strengths with respect to a best match in order to ensure that a certain position of the user device with respect to a human body and its physical properties are correctly taken into account.

Preferably the user devices as well as the detectors are smart phones allowing for reducing the costs of the measurement apparatus as well as the user devices as these phones are easily available.

The invention is of particular interest for indoor mapping. Typically in these surroundings attenuation and scattering disturb signals significantly and, therefore, one has to provide different approaches. The invention unlike any other approach incorporates the scattering and attenuating properties already at measurement time into the approach.

In addition the invention may also be enhanced by further issues such as the possibility to tag the map while doing measurements. I.e. Near Field Communication Devices as well as optical codes as found on fairs may be used for tagging the map on certain (predetermined) positions. In addition even the users themselves may contribute to the generation of the map as it may also update the map by the measurement data of user devices, e.g. if they provide for a clear identification of their actual position. As the method allows also including GPS data which may be available at the edge of a building, even an indoor environment may be mapped rather easily.

In summary, the invention allows for taking measurements in a rapid manner by employing a plurality of measuring devices which are used for measuring at substantially the same time. Furthermore, by use of a plurality of measuring devices also the orientation may be taken into account thereby improving accuracy. In addition the measurement arrangement may also take the scattering and attenuation profile of a user himself into account.

Another issue which can be tackled within the invention is the problem of annotation. Annotation means that additional information pertaining to semantics typically included in a map such as names, points of interest, etc. needs to be added. In previously known systems the process of fingerprinting a map by signals of a number of sources was decoupled from this annotation process. The method of the invention in turn also allows for a combined approach as will be detailed in the following. I.e. the predetermined positions may be a list of previously known point of interest. By providing this information towards the measurement arrangement, an operator of the measurement arrangement may arrange the measurement arrangement at a point of interest and may activate the measurement for the point of interest. I.e. the semantic information is already present on the measurement. As an example, assume that the booths of a fair are known a priori. Then it would be easily possible to define the owners of the booth as Point-of-Interest. It would then be extremely easy to instigate measurements at (each) said point-of-interest and having thereby already fulfilled the task of annotation beforehand.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for using and generating a map allowing for determining a position of a user device (UD₁, UD₂) based on one or more detected wireless signals originating from one or more sources (SRC₁, SRC₂, SRC₃, SRC₄), whereby each source (SRC₁, SRC₂, SRC₃, SRC₄) is selected from the group comprising near field communication device, mobile telephone, W-LAN access point, Bluetooth access point, etc., whereby the method comprises:
detecting (100) at each one of a plurality of certain positions (P₁, P₂, P₃, P₄), each of said certain positions corresponding to a position on the map, by a plurality of detectors (MD₁, MD₂, MD₃, MD₄), at the same time, at least one wireless signal originating from at least one of said one or more sources (SRC₁, SRC₂, SRC₃, SRC₄) with respect to its signal strength, whereby the plurality of detectors (MD₁, MD₂, MD₃, MD₄) are arranged such that they reflect different positions of a corresponding user device (UD₁, UD₂) and its physical characteristics such as attenuation or scattering when worn by a user at the human body, thereby allowing for providing detected signal strengths with respect to different orientations,
storing (200) said signal strength of each detected wireless signal originating from said one of said one or more sources (SRC₁, SRC₂, SRC₃, SRC₄) with respect to the plurality of detectors (MD₁, MD₂, MD₃, MD₄) and the certain position,
provisioning (300) of said map,
detecting (400) by a user device (UD₁, UD₂) at an unknown position a number of wireless signals and their signal strength,
comparing (500) said signal strengths of said wireless signals detected by said user device (UD₁, UD₂) with said stored signal strengths with respect to at least a best match of the comparison, whereby a certain position of the user device (UD₁, UD₂) with respect to the human body of the user and its physical properties are taken into account and to thereby allow for determining the position of said user device (UD₁, UD₂).

2. Method according to claim 1, whereby said step of comparing (500) is performed by an external server (SRV) and/or by said user device (UD₁, UD₂).

3. Method according to claim 1 or 2, whereby said step of detecting (100) at certain positions (P₁, P₂, P₃, P₄) comprises a filtering (120) of wireless signals such that signals pertaining to mobile devices are eliminated and/or weak signals are eliminated.

4. Method according to any one of claims 1 to 3, whereby said step of detecting (100) at a certain position (P₁, P₂, P₃, P₄) is performed at a plurality of predetermined positions (P₁, P₂, P₃, P₄), while a signal strength detected between these predetermined positions (P₁, P₂, P₃, P₄) is held to be located on a trajectory which is assumed to be passed along by a substantial constant velocity.

5. Method according to any one of claims 1 to 4, whereby said certain positions (P₁, P₂, P₃, P₄) are identified (440) by recognition of a particular near field communication device and/or by determining an optical code such as a QR-Code.

6. Method according to any one of claims 1 to 5, whereby said method allows for communication between user devices (UD₁, UD₂) such that actual positions of said user devices may be exchanged (520) and/or routes towards one another may be exchanged (520).

7. Method according to any one of claims 1 to 6, whereby said method allows for communication between user devices (UD₁, UD₂) such that a time for a meeting of different users may be exchanged (540).

8. Method according to any one of claims 1 to 7, whereby the step of comparing (500) said wireless signals detected by said user device (UD₁, UD₂) with said stored signal strengths comprises a comparison with respect to a worst match.

9. Method according to any one of claims 1 to 8, whereby the method steps a) to c) are performed by an automated measuring system such as a robot.

10. Method according to any one of claims 1 to 8, whereby the method steps d) and e) are performed by a smart phone.

11. Measurement arrangement for generating a map allowing for determining a position of a user device (UD₁, UD₂) based on one or more detected wireless signals originating from one or more sources (SRC₁, SRC₂, SRC₃, SRC₄), whereby each source (SRC₁, SRC₂, SRC₃, SRC₄) is selected from the group comprising near field communication device, mobile telephone, W-LAN access point, Bluetooth access point, etc., the measurement arrangement comprising:
a plurality of detectors (MD₁, MD₂, MD₃, MD₄) adapted for detecting, at a certain position (P₁, P₂, P₃, P₄) corresponding to a position on the map, at the same time at least one wireless signal originating from said one or more sources (SRC₁, SRC₂, SRC₃, SRC₄) with respect to its signal strength, whereby the plurality of detectors (MD₁, MD₂, MD₃, MD₄) are arranged such that they reflect different positions of a corresponding user device (UD₁, UD₂) and its physical characteristics such as attenuation or scattering when worn by a user at the human body, thereby allowing for providing detected signal strengths with respect to different orientations, and
a memory (MEM) for storing said signal strengths of each detected wireless signal originating from said one or more sources (SRC₁, SRC₂, SRC₃, SRC₄) with respect to the plurality of detectors (MD1, MD2, MD3, MD4) and the certain position.

12. A user device (UD₁, UD₂) for using a map allowing for determining a position of said user device (UD₁, UD₂) based on one or more detected wireless signals originating from one or more sources (SRC₁, SRC₂, SRC₃, SRC₄), whereby a source (SRC₁, SRC₂, SRC₃, SRC₄) is selected from the group comprising near field communication device, mobile telephone, W-LAN access point, Bluetooth access point, etc., the user device (UD₁, UD₂) comprising:
one or more receiver (RX₁, RX₂) for receiving wireless signals originating from said one or more sources (SRC₁, SRC₂, SRC₃, SRC₄) at an unknown position a number of wireless signals and for detecting their signal strength, and
means for requesting (CPU) a comparison of said wireless signals detected by said user device (UD₁, UD₂) with said stored signal strengths with respect to a best match of the comparison to thereby take a certain position of the user device (UD₁, UD₂) with respect to the human body and its physical properties into account and to thereby allow for determining the position of said user device (UD₁, UD₂).

## Patentansprüche

1. Verfahren zum Verwenden und Erzeugen einer Karte, die das Bestimmen einer Position eines Benutzergerätes (UD₁, UD₂) basierend auf einem oder mehreren detektierten drahtlosen Signalen von einer oder mehreren Quellen (SRC₁, SRC₂, SRC₃, SRC₄) ermöglicht, wobei jede Quelle (SRC₁, SRC₂, SRC₃, SRC₄) ausgewählt ist aus der Gruppe aufweisend Nahfeldkommunikationsgerät, Mobiltelefon, W-LAN Zugangspunkt, Bluetooth-Zugangspunkt usw., wobei das Verfahren aufweist:
Detektieren (100) an jeder aus einer Vielzahl von bestimmten Positionen (P₁, P₂, P₃, P₄), die jeweils einer Position auf der Karte entsprechen, durch mehrere Detektoren (MD₁, MD₂, MD₃, MD₄) im Wesentlichen gleichzeitig mindestens ein drahtloses Signal ausgehend von mindestens einer der einen oder mehreren Quellen (SRC₁, SRC₂, SRC₃, SRC₄) hinsichtlich ihrer Signalstärke, wobei die mehreren Detektoren (MD₁, MD₂, MD₃, MD₄) so angeordnet sind, dass sie unterschiedliche Positionen eines entsprechenden Benutzergeräts (UD₁, UD₂) und seine physikalischen Eigenschaften wie Dämpfung oder Streuung widerspiegeln, wenn sie von einem Benutzer am menschlichen Körper getragen werden, wodurch erfasste Signalstärken in Bezug auf unterschiedliche Orientierungen bereitgestellt werden können,
Speichern (200) der Signalstärken jedes detektierten drahtlosen Signals, das von der einen der einen oder mehreren Quellen stammt (SRC₁, SRC₂, SRC₃, SRC₄) bezüglich der Vielzahl von Detektoren (MD₁, MD₂, MD₃, MD₄) und der bestimmten Position,
Bereitstellung (300) der Karte,
Detektion (400) durch ein Benutzergerät (UD₁, UD₂) an einer unbekannten Position eine Anzahl von Funksignalen und deren Signalstärke,
Vergleichen (500) der Signalstärken, der von dem Benutzergerät (UD₁, UD₂) detektierten Funksignale, mit den gespeicherten Signalstärken in Bezug auf mindestens eine beste Übereinstimmung des Vergleiches, wobei eine bestimmte Position des Benutzergeräts (UD₁, UD₂) in Bezug auf den menschlichen Körper und seine physikalischen Eigenschaften berücksichtigt werden und dadurch erlauben die Position des Benutzergerätes (UD₁, UD₂) zu bestimmen.

2. Verfahren nach Anspruch 1, wobei der Schritt des Vergleichens auf einem externen Server (SRV) und / oder durch das Benutzergerät (UD₁, UD₂) durchgeführt wird.

3. Verfahren nach Anspruch 1 oder 2, wobei der Schritt des Detektierens an einer bestimmten Position (P₁, P₂, P₃, P₄) eine Filterung (120) von Funksignalen aufweist, so dass Signale von mobilen Geräten eliminiert werden und / oder schwache Signale eliminiert werden.

4. Verfahren nach einem der Ansprüche 1 bis 3, wobei der Schritt des Detektierens (100) an einer bestimmten Position (P₁, P₂, P₃, P₄) an einer Vielzahl von vorbestimmten Positionen (P₁, P₂, P₃, P₄), durchgeführt wird, während eine Signalstärke, die zwischen diesen vorbestimmten Positionen (P₁, P₂, P₃, P₄) erfasst wird, im Wesentlichen als auf einer Trajektorie angeordnet angenommen wird, von der angenommen wird, dass sie mit einer im Wesentlichen konstanten Geschwindigkeit durchlaufen wird.

5. Verfahren nach einem der Ansprüche 1 bis 4, wobei die bestimmten Positionen (P₁, P₂, P₃, P₄) durch Erkennen einer bestimmten Nahfeldkommunikationsvorrichtung und / oder durch Bestimmen eines optischen Codes wie ein QR-Code identifiziert (440) werden.

6. Verfahren nach einem der Ansprüche 1 bis 5, wobei das Verfahren die Kommunikation zwischen Benutzergeräten (UD₁, UD₂) ermöglicht, so dass tatsächliche Positionen der Benutzergeräte ausgetauscht (520) werden können und / oder Routen zueinander ausgetauscht (520) werden können.

7. Verfahren nach einem der Ansprüche 1 bis 6, wobei das Verfahren die Kommunikation zwischen Benutzergeräten (UD₁, UD₂) ermöglicht, so dass eine Zeit für ein Treffen verschiedener Benutzer ausgetauscht (540) werden kann.

8. Verfahren nach einem der Ansprüche 1 bis 7, wobei der Schritt des Vergleichens (500) der von der Benutzervorrichtung (UD₁, UD₂) detektierten drahtlosen Signale mit den gespeicherten Signalstärken einen Vergleich in Bezug auf eine schlechteste Übereinstimmung umfasst.

9. Verfahren nach einem der Ansprüche 1 bis 8, wobei die Verfahrensschritte a) bis c) von einem automatisierten Messsystem wie einem Roboter durchgeführt werden.

10. Verfahren nach einem der Ansprüche 1 bis 8, wobei die Verfahrensschritte d) und e) von einem Smartphone durchgeführt werden.

11. Messanordnung zum Erzeugen einer Karte, insbesondere einer Innenkarte, die das Bestimmen einer Position eines Benutzergerätes (UD₁, UD₂) basierend auf einem oder mehreren detektierten Funksignalen aus einer oder mehreren Quellen (SRC₁, SRC₂, SRC₃, SRC₄) ermöglicht, wobei eine Quelle (SRC₁, SRC₂, SRC₃, SRC₄) ausgewählt ist aus der Gruppe aufweisend Nahfeldkommunikationsgerät, Mobiltelefon, W-LAN-Zugangspunkt, Bluetooth-Zugangspunkt usw., wobei die Messanordnung aufweist:
eine Vielzahl von Detektoren (MD₁, MD₂, MD₃, MD₄) eingerichtet zum Detektieren an einer bestimmten Position (P₁, P₂, P₃, P₄), die einer Position auf der Karte entspricht, gleichzeitig mindestens ein drahtloses Signal, das von dieser einen oder mehrere Quellen (SRC₁, SRC₂, SRC₃, SRC₄) stammt, hinsichtlich ihrer Signalstärke, wobei die mehreren Detektoren (MD₁, MD₂, MD₃, MD₄) so angeordnet sind, dass sie unterschiedliche Positionen eines entsprechenden Benutzergeräts (UD₁, UD₂) und seine physikalischen Eigenschaften wie Dämpfung oder Streuung widerspiegeln, wenn sie von einem Benutzer am menschlichen Körper getragen werden,
wodurch erfasste Signalstärken in Bezug auf unterschiedliche Orientierungen bereitgestellt werden können, und
ein Speicher (MEM) zum Speichern der Signalstärken jedes erkannten drahtlosen Signals, das von der einen oder mehreren Quellen (SRC₁, SRC₂, SRC₃, SRC₄) bezüglich der Vielzahl von Detektoren und der bestimmten Position stammt.

12. Benutzergerät (UD₁, UD₂) zur Verwendung einer Karte, die es ermöglicht, eine Position des Benutzergerätes (UD₁, UD₂) basierend auf einem oder mehreren detektierten drahtlosen Signalen von einer oder mehreren Quellen (SRC₁, SRC₂, SRC₃, SRC₄) zu bestimmen, wobei jede Quelle (SRC₁, SRC₂, SRC₃, SRC₄) ausgewählt ist aus der Gruppe aufweisend Nahfeldkommunikationsgerät, Mobiltelefon, W-LAN Zugangspunkt, Bluetooth-Zugangspunkt usw., wobei das Benutzergerät (UD₁, UD₂) aufweist:
einen oder mehrere Empfänger (RX₁, RX₂) zum Empfangen von einer Zahl von drahtlosen Signalen, die von der einen oder den mehreren Quellen (SRC₁, SRC₂, SRC₃, SRC₄) bei einer unbekannten Position stammen, und
zum Detektieren derer Signalstärke,
Mittel zum Anfordern (CPU) eines Vergleichs der drahtlosen Signale, welche durch das Benutzergerät (UD₁, UD₂) detektierten wurden, mit den gespeicherten Signalstärken in Bezug auf eine beste Übereinstimmung des Vergleichs, wobei eine bestimmte Position des Benutzergeräts (UD₁, UD₂) in Bezug auf den menschlichen Körper und seine physikalischen Eigenschaften berücksichtigt werden und dadurch erlauben die Position des Benutzergerätes (UD₁, UD₂) zu bestimmen.

## Revendications

1. Procédé d'utilisation et de génération d'une carte permettant de déterminer une position d'un dispositif utilisateur (UD₁, UD₂) à partir d'un ou plusieurs signaux sans fil détectés en provenance d'une ou plusieurs sources (SRC₁, SRC₂, SRC₃, SRC₄), dans lequel chaque source (SRC₁, SRC₂, SRC₃, SRC₄) est sélectionnée dans le groupe comprenant un dispositif de communication à champ proche, un téléphone mobile, un point d'accès W-LAN, un point d'accès Bluetooth, etc., ce procédé comprenant:
la détection (100) à chacune d'une pluralité de positions définies (P₁, P₂, P₃, P₄), chacune des dispositions définies correspondant à une position sur la carte, par une pluralité de détecteurs (MD₁, MD₂, MD₃, MD₄) en même temps,
d'au moins un signal sans fil provenant d'au moins une desdites une ou plusieurs sources (SRC₁, SRC₂, SRC₃, SRC₄), la pluralité de détecteurs (MD₁, MD₂, MD₃, MD₄) étant disposés de manière à refléter différentes positions d'un dispositif utilisateur correspondant (UD₁, UD₂) et ses caractéristiques physiques comme l'atténuation ou la dispersion quand il est porté par un utilisateur sur un corps humain, permettant ainsi la fourniture de puissances de signaux détectés par rapport à différentes orientations,
la sauvegarde (200) de ladite puissance de signaux de chaque signal sans fil détecté en provenance de ladite desdites plusieurs sources (SRC₁, SRC₂, SRC₃, SRC₄) au niveau de la pluralité de détecteurs (MD₁, MD₂, MD₃, MD₄) et de la position définie,
la mise à disposition (300) de ladite carte,
la détection (400) par un dispositif utilisateur (UD₁, UD₂), à une position inconnue, d'un certain nombre de signaux sans fil et de leur puissance de signaux,
la comparaison (500) desdites puissances de signaux sans fil détectés par ledit dispositif utilisateur (UD₁, UD₂) avec lesdites puissances de signaux sauvegardées au niveau d'au moins une coïncidence optimale de la comparaison (UD₁, UD₂) au niveau du corps humain de l'utilisateur et de la prise en compte de ses propriétés physiques et afin de permettre ainsi de déterminer la position dudit dispositif utilisateur (UD₁, UC₂).

2. Procédé selon la revendication 1, dans lequel ladite étape de comparaison (500) est réalisée par un serveur externe (SRV) et/ou par ledit dispositif utilisateur (UD₁, UD₂).

3. Procédé selon la revendication 1 or 2, dans lequel ladite étape de détection (100) à certaines positions (P₁, P₂, P₃, P₄) comprend un filtrage (120) de signaux sans fil tels que des signaux concernant des dispositifs mobiles soient éliminés et/ou que des signaux faibles soient éliminés.

4. Procédé selon l'une quelconque des revendications 1 à 3, dans lequel ladite étape de détection (100) à une certaine position (P₁, P₂, P₃, P₄) est réalisée à une pluralité de positions prédéterminées (P₁, P₂, P₃, P₄), tandis qu'une puissance de signaux détectés entre ces positions prédéterminées (P₁, P₂, P₃, P₄) est maintenue de manière à se situer sur une trajectoire qui est supposée parcourue à une vitesse substantielle constante.

5. Procédé selon l'une quelconque des revendications 1 à 4, dans lequel lesdites positions définies (P₁, P₂, P₃, P₄) sont identifiées (440) par reconnaissance d'un dispositif de communication à champ proche particulier et/ou par détermination d'un code optique tel qu'un code QR.

6. Procédé selon l'une quelconque des revendications 1 à 5, dans lequel ledit procédé permet une communication entre des dispositifs utilisateurs (UD₁, UD₂) de manière à ce que des positions réelles desdits dispositifs utilisateurs (520) puissent être échangées et que des itinéraires vers un autre puissent être échangés (520).

7. Procédé selon l'une quelconque des revendications 1 à 6, dans lequel ledit procédé permet une communication entre des dispositifs utilisateurs (UD₁, UD₂) de manière à ce qu'une heure de rencontre de différents utilisateurs puisse être échangée (540).

8. Procédé selon l'une quelconque des revendications 1 à 7, dans lequel l'étape de comparaison (500) desdits signaux sans fil détectés par ledit dispositif utilisateur (UD₁, UD₂) avec lesdites puissances de signaux sauvegardés comprend une comparaison au niveau d'une pire coïncidence.

9. Procédé selon l'une quelconque des revendications 1 à 8, dans lequel les étapes a) à c) du procédé sont réalisées par un système de mesure automatisé comme un robot.

10. Procédé selon l'une quelconque des revendications 1 à 8, dans lequel les étapes d) et e) du procédé sont réalisées par un smartphone.

11. Dispositif de mesure pour la génération d'une carte permettant de déterminer une position d'un dispositif utilisateur (UD₁, UD₂) à partir d'un ou plusieurs signaux sans fil détectés en provenance d'une ou plusieurs sources (SRC₁, SRC₂, SRC₃, SRC₄), dans lequel chaque source (SRC₁, SRC₂, SRC₃, SRC₄) est sélectionnée dans le groupe comprenant un dispositif de communication à champ proche, un téléphone mobile, un point d'accès W-LAN, un point d'accès Bluetooth, etc., ce procédé comprenant:
une pluralité de détecteurs (MD₁, MD₂, MD₃, MD₄) aptes à détecter à une certaine position (P₁, P₂, P₃, P₄) correspondant à une position sur la carte, en même temps au moins un signal sans fil provenant d'au moins une desdites une ou plusieurs sources (SRC₁, SRC₂, SRC₃, SRC₄) au niveau de sa puissance de signaux, la pluralité de détecteurs (MD₁, MD₂, MD₃, MD₄) étant disposés de manière à refléter différentes positions d'un dispositif utilisateur correspondant (UD₁, UD₂) et ses caractéristiques physiques comme l'atténuation ou la dispersion quand il est porté par un utilisateur sur un corps humain, en permettant ainsi la fourniture de puissances de signaux détectés par rapport à différentes orientations, et
une mémoire (MEM) pour sauvegarder lesdites puissances de signaux de chaque signal sans fil détecté en provenance desdites une ou plusieurs sources (SRC₁, SRC₂, SRC₃, SRC₄) au niveau de la pluralité de détecteurs (MD₁, MD₂, MD₃, MD₄) et de la position définie.

12. Dispositif utilisateur (UD₁, UD₂) pour l'utilisation d'une carte permettant la détermination d'une position dudit dispositif utilisateur (UD₁, UD₂) à partir d'un ou plusieurs signaux sans fil détectés en provenance d'une ou plusieurs sources (SRC₁, SRC₂, SRC₃, SRC₄), dans lequel une source (SRC₁, SRC₂, SRC₃, SRC₄) est sélectionnée dans le groupe comprenant un dispositif de communication à champ proche, un téléphone mobile, un point d'accès W-LAN, un point d'accès Bluetooth, etc., ce dispositif utilisateur (UD₁, UD₂) comprenant:
un ou plusieurs récepteurs (RX₁, RX₂) pour la réception de signaux sans fil en provenance desdites une ou plusieurs sources (SRC₁, SRC₂, SRC₃, SRC₄), à une position inconnue, d'un certain nombre de signaux sans fil et pour détecter leur puissance de signaux, et
un moyen de demande (CPU) d'une comparaison desdits signaux sans fil détectés par ledit dispositif utilisateur (UD₁, UD₂) avec lesdites puissances de signaux sauvegardés au niveau d'une coïncidence optimale de la comparaison pour prendre ainsi une certaine position du dispositif utilisateur (UD₁, UD₂) par rapport au corps humain et prendre en compte ses propriétés physiques et permettre ainsi la détermination de la position dudit dispositif utilisateur (UD₁, UD₂).
